# EUROPEAN PATENT SPECIFICATION

(11) **EP 0 397 884 B1**
(45) Date of publication and mention of the grant of the patent: **01.05.1996**
(21) Application number: 89912130.5
(22) Date of filing: 07.11.1989
(51) Int. Cl.: G05B 19/408

(54) **PROFILE-SHAPE MACHINING SYSTEM**
BEARBEITUNGSSYSTEM FÜR BAHNKONTUREN
SYSTEME D'USINAGE DE FORMES PROFILEES

(30) Priority: 29.11.1988 JP 301833/88
(43) Date of publication of application: 22.11.1990
(73) Proprietor: FANUC LTD., Minamitsuru-gun, Yamanashi 401-05 (JP)
(72) Inventor: SHINOZAKI, Satoru, Ibaragi 308 (JP)
(74) Representative: Brunner, Michael John
(86) International application number: JP8901145
(87) International publication number: WO9006209

(56) References cited:
- EP-A- 0 151 643
- EP-A- 0 333 865
- DE-A- 3 928 548
- JP-A- 6 215 057
- JP-A-60 126 710

## Description

### TECHNICAL FIELD

The present invention relates to a contour configuration machining system of an interactive numerical control apparatus, and more specifically, to a contour configuration machining system by which a cutting direction can be arbitrarily changed.

### BACKGROUND ART

Interactive numerical control apparatuses are widely used to control various machine tools, because an operator can easily create programs without the need for taking a language protocol, NC tape format and the like of an automatic programming into consideration.

For example, when a machining operation is carried out by a lathe, an interactive type input of configuration data by an operator enables a program to be created by automatically calculating intersect and contact points of a contour configuration and like, and accordingly, the machining operation begins at the start point of a first configuration data and is carried out along the required contour configuration.

Nevertheless, some of the tools used for a lathe differ cutting performances in accordance with the cutting directions thereof, and when such a tool is used in a conventional cutting system, the machining operation is not always carried out in an optimum cutting direction of the tool, depending upon the portion of a workpiece being machined, because the machining operation is carried out along configuration composed of a series of contours. As a result, the machining efficiency is lowered and the tool life is shortened.

EP-A-0151643 discloses a cutting direction input method for an automatic programming apparatus for an NC device.

Taking the above into consideration, an object of the present invention is to provide a contour configuration machining system capable of arbitrarily changing a cutting direction. To solve the above problem, according to the present invention, there is provided a contour configuration machining method for an interactive numerical control apparatus for carrying out a machining operation by a lathe by programming a predetermined contour configuration comprising a plurality of configurations based upon configuration data defining straight lines, arcs and the like, the method comprising the steps of:
independently setting a cutting direction by setting a start point and an end point for the predetermined configuration contour; and
carrying out the machining operation by moving a tool according to the cutting direction; characterised by:
the cutting direction being set independently for each configuration by setting a start point and an end point for each configuration in order to obtain optimum cutting performance of said tool; and
moving the tool to a predetermined auxiliary point not interfering with the machining operation in a quick feed step and then moving to the start point of the next configuration when the coordinates of the end point of a previous configuration do not coincide with the coordinates of the start point of the next configuration.

Accordingly, the cutting direction is independently set for each of the configuration data, the machining operation can be carried out while the tool is moved in an optimum direction at all times, even if a series of contours are machined.

### BRIEF DESCRIPTION OF THE DRAWINGS

Figure 1 is a program display of a contour configuration according to a contour configuration machining system of an embodiment of the present invention;
Figure 2 is a diagram showing a movement of a tool when a machining operation is carried out according to an embodiment of the present invention; and
Figure 3 is a schematic diagram of hardware of an interactive numerical control apparatus embodying the present invention.

### BEST MODE OF CARRYING OUT THE INVENTION

An embodiment of the present invention will be described below with reference to drawings.

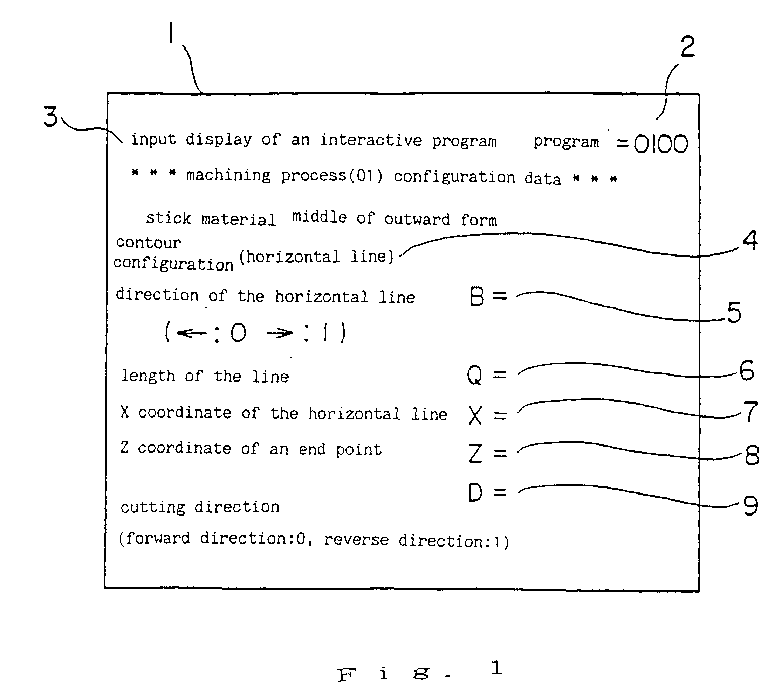

Figure 1 is a display used when a machining program of a lathe is created according to a contour configuration machining system of an embodiment of the present invention, wherein 1 designates a display of an interactive numerical control apparatus on which a program number 2 and a title 3 indicating that the display is a configuration data input display are shown. Note that the display shows the case in which a contour configuration of a horizontal line shown by numeral 4 is programmed.

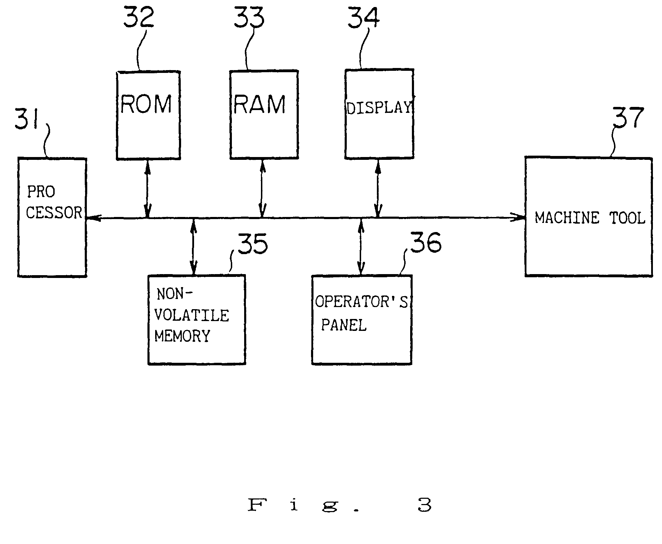

In Figure 1, 5 to 8 designate columns to which configuration data is input. Namely, 5 denotes a column specifying a direction of the configuration data, in which "0" is input when the data is directed to the left from a start point and "1" is input when the data is directed to the right from the start point, 6 denotes a column to which a length of the line is input, 7 denotes a column to which an X coordinate is input, and 8 denotes a column to which a Z coordinate of an end point is input.

Designated at 9 is a column for specifying a cutting direction, wherein "0" is input when the cutting direction is forward with respect to the direction 5 of the configuration data and "1" is input when the cutting direction is reverse with respect thereto. Note that configuration data of a vertical line, an arc and the like other than above are input to respective dedicated displays, but the method of setting the cutting direction is the same as that described above, and thus these settings are based on the direction of the input configuration data. A configuration composed of a series of arbitrary contours, and a cutting direction of each section thereof, are programmed as described above.

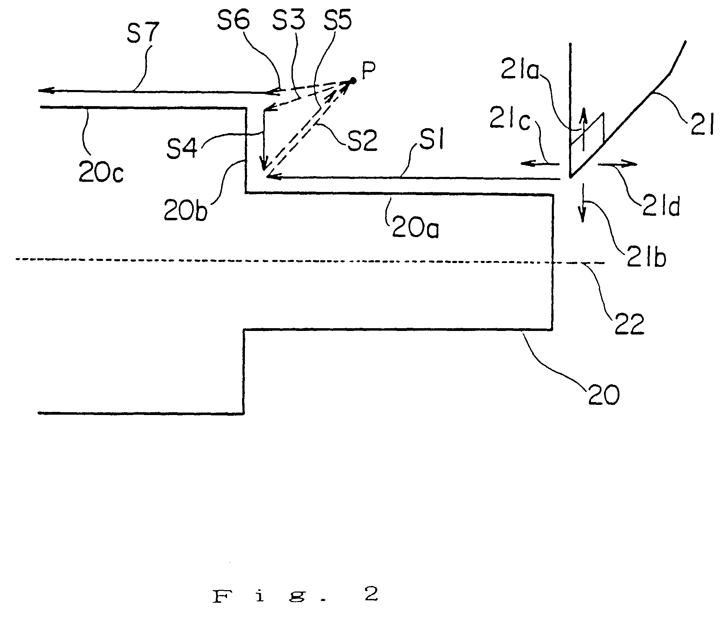

Figure 2 is a diagram showing a movement of a tool when machining operation is carried out, wherein 20 designates a programmed workpiece contour configuration composed of a configuration 20a, a configuration 20b and a configuration 20C, and 22 designates an axis of rotation.

Designated at 21 is the tool having a strong horizontal cutting ability in a direction 21c and a weak horizontal cutting ability in a direction 21d, and further a strong vertical cutting ability in a direction 21b and a weak vertical cutting ability in a direction 21a. Therefore, in this case the program specifies that all machining operations in a horizontal direction must be carried out in the direction 21c and all machining operations in a vertical direction must be carried out in the direction 21b.

More specifically, in a machining process S1, the configuration 20a is machined in the direction 21c.

When this machining process S1 has been completed, the lip of the tool 21 is moved to a point P by a quick feed process S2. The point P is an auxiliary point set while programming in such a manner that it does not interfere with the machining operation. The tool 21 is moved to the start point of the configuration 20b from the auxiliary point P by a quick feed process S3 and carries out a machining process S4 in the direction 21b.

Next, the lip of the tool 21 is moved again to the auxiliary point P by a quick feed process S5, then further moved to the start point of the configuration 20c therefrom by a quick feed process S6, and carries out a machining process S7 in the direction 21c. Accordingly, as described above, the machining operation can be always carried out in the optimum cutting direction of the tool 21 for any machining process.

Although the above description is made with respect to a machining operation carried out by a lathe, the present invention is applicable to any kind of machining operation other than above.

Figure 3 shows a schematic diagram of hardware of an interactive numerical control apparatus embodying the present invention, wherein 31 designates a processor for controlling the interactive numerical control apparatus as a whole, 32 designates a ROM in which a system program is stored, 33 designates a RAM in which various data is stored, 34 designates a display unit such as a CRT or the like for displaying input configuration data, calculated intersect points and the like, 35 designates a non-volatile memory in which various parameters, pitch error correction amounts, machining programs and the like, as well as configuration data and a cutting direction for each of the configuration data are stored, 36 designates an operator's panel such as a key board, and 37 designates a machine tool.

As described above, according to the present invention, when a machining program is created, a cutting direction of a tool is specified to thereby carry out the machining operation in an optimum direction inherent to a tool at all times. As a result, the machining efficiency is improved and the tool life is prolonged.

## Claims

1. A contour configuration machining method for an interactive numerical control apparatus for carrying out a machining operation by a lathe by programming a predetermined contour configuration comprising a plurality of configurations based upon configuration data defining straight lines, arcs and the like, the method comprising the steps of:
independently setting a cutting direction by setting a start point and an end point for the predetermined configuration contour; and
carrying out the machining operation by moving a tool (21) according to the cutting direction; characterised by:
the cutting direction being set independently for each configuration by setting a start point and an end point for each configuration in order to obtain optimum cutting performance of said tool; and
moving the tool to a predetermined auxiliary point (P) not interfering with the machining operation in a quick feed step and then moving to the start point of the next configuration when the coordinates of the end point of a previous configuration do not coincide with the coordinates of the start point of the next configuration.

2. A method according to claim 1, wherein the set cutting direction is selected from a forward direction and a reverse direction with respect to the direction from said start point to said end point of the configuration data.

## Patentansprüche

1. Bearbeitungsverfahren für eine interaktive numerische Steuerung zur Profilgebung, wobei eine Bearbeitung mit einer Drehbank durch Programmieren einer vorbestimmten Profilgebung ausgeführt wird, die aus mehreren Bahnstrecken besteht, die auf Profildaten beruhen, welche gerade Linien, Bögen o.ä. definieren, wobei das Verfahren die Schritte aufweist:
Durch Einstellen eines Anfangepunktes und eines Endpunktes für die vorbestimmte Profilgebung wird unabhängig eine Schnittrichtung eingestellt; und
die Bearbeitung wird durch Bewegen eines Werkzeuges (21) gemäß der Schnittrichtung ausgeführt,
gekennzeichnet durch
die Schnittrichtung wird unabhängig für jede Bahnstrecke durch Einstellen eines Anfangspunktes und eines Endpunktes für jede Bahnstrecke eingestellt, um eine optimale Schnittleistung des Werkzeuges zu erzielen und
das Werkzeug wird in einem schnellen Zustellschritt zu einem vorbestimmten Hilfspunkt P bewegt, der den Bearbeitungsvorgang nicht stört, und wird dann zum Anfangspunkt der nächsten Bahnstrecke bewegt, wenn die Koordinaten des Endpunktes einer vorhergehenden Bahnstrecke nicht mit den Koordinaten des Anfangspunktes der nächsten Bahnstrecke übereinstimmen.

2. Verfahren nach Anspruch 1, bei dem die eingestellte Schnittrichtung mit Rücksicht auf die Richtung von dem Anfangspunkt zum Endpunkt der Profildaten aus einer Vorwärts- und Rückwärtsrichtung ausgewählt werden.

## Revendications

1. Un procédé d'usinage de formes profilées pour un appareil à commande numérique interactif permettant d'effectuer une opération d'usinage à l'aide d'un tour en programmant une forme profilée prédéterminée comprenant un ensemble de formes basées sur des données de formes définissant des lignes droites, des arcs et analogues, le procédé comprenant les opérations consistant à :
régler de manière indépendante une direction de coupe en réglant un point de départ et un point d'extrémité pour la forme profilée prédéterminée ; et
effectuer l'opération d'usinage en déplaçant un outil (21) selon la direction de coupe ; caractérisé par le fait que :
la direction de coupe est réglée de manière indépendante pour chaque forme en réglant un point de départ et un point d'extrémité pour chaque forme de manière à obtenir un rendement de coupe optimum pour ledit outil ; et
déplacer l'outil vers un point auxiliaire prédéterminé (P) n'interférant pas avec l'opération d'usinage dans une étape d'alimentation rapide et déplacer ensuite vers le point de départ de la forme suivante lorsque les coordonnées du point d'extrémité d'une forme antérieure ne coïncident pas avec les coordonnées du point de départ de la forme suivante.

2. Un procédé selon la revendication 1, dans lequel la direction de coupe réglée est choisie entre une direction directe et une direction inverse par rapport à la direction depuis ledit point de départ jusqu'audit point d'extrémité des données de forme.
